# EUROPEAN PATENT APPLICATION

(11) **EP 4 455 169 A1**
(43) Date of publication of application: **30.10.2024**
(21) Application number: 23193732.7
(22) Date of filing: 28.08.2023
(51) Int. Cl.: C08F 110/06, C08F 210/06

(54) **CATALYST COMPOSITION FOR POLYMERIZING PROPYLENE AND METHOD FOR PRODUCING POLYPROPYLENE**

(30) Priority: 25.04.2023 TW 112115421
(71) Applicant: Formosa Plastics Corporation, Kaohsiung City (TW)
(72) Inventor: Chang, Chao-Shun, Kaohsiung City (TW); Chen, Hsing-Chun, Kaohsiung City (TW); Hsieh, Kun-Pei, Kaohsiung City (TW); CHIU, Chun-Wei, Kaohsiung City (TW)
(74) Representative: Lang, Christian

(57) **Abstract**

The present disclosure relates to a catalyst composition for polymerizing propylene and a method for producing polypropylene. The catalyst composition for polymerizing the propylene includes a modifying agent. The modifying agent is an ester compound having hydrophilic groups and hydrophobic groups. In the method for producing the polypropylene, a reverse microcellular structure is formed by the modifying agent during a propylene polymerization, in which the hydrophilic groups are inside the reverse microcellular structure, and the hydrophobic groups are outside the reverse microcellular structure, such that polar substances in a raw material are retained inside the reverse microcellular structure. Thus, poisoning of the catalyst is reduced. Besides, the modifying agent can maintain a valence state of titanium in an active site of the catalyst at positive trivalent, such that the propylene polymerization between the titanium and the monomer is facilitated, thereby enhancing an activity of the catalyst.

## Description

### BACKGROUND

### Field of Invention

The present disclosure relates to a catalyst composition for polymerizing propylene and a method for producing polypropylene, and in particular relates to a catalyst composition for polymerizing propylene using a modifying agent and a method for producing polypropylene.

### Description of Related Art

A known catalyst composition for polymerizing propylene uses a Ziegler-Natta catalyst to promote a propylene polymerization reaction. However, the Ziegler-Natta catalyst has poisoning problems. Although many studies have used external electron donors to improve the poisoning problems, those have not been able to effectively enhance an activity of the catalyst. In view of this, there is an urgent need to develop a novel catalyst composition for polymerizing propylene and a method for producing polypropylene to improve the above-mentioned shortcomings.

### SUMMARY

In view of the above issues, one aspect of the present disclosure provides a catalyst composition for polymerizing propylene. The catalyst composition for polymerizing the propylene uses an ester compound having hydrophilic groups and hydrophobic groups as a modifying agent. The modifying agent can form a reverse microcellular structure, so that polar substances in a raw material are inside the reverse microcellular structure, thereby reducing poisoning of the catalyst. In addition, the modifying agent can maintain a valence state of titanium in an active site of the catalyst at positive trivalent to promote a polymerization reaction between the titanium and the monomer, thereby enhancing an activity of the catalyst.

Another aspect of the present disclosure provides a method for producing polypropylene. The method for producing the polypropylene uses the aforementioned catalyst composition for polymerizing the propylene.

According to one aspect of the present disclosure, the catalyst composition for polymerizing propylene is provided. The catalyst composition for polymerizing the propylene includes a main catalyst, an organoaluminum compound, an external electron donor and a modifying agent. The main catalyst includes titanium halide, a carrier and an inner electron donor. A molar ratio (MA/Ti) of the modifying agent to titanium atoms of the titanium halide is greater than 0 and less than 128, and the modifying agent is selected from a group consisting of a compound having following formula (1), a compound having following formula (2) and a combination thereof.

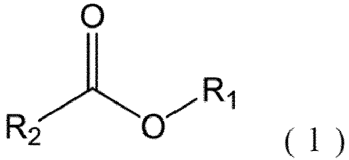

In the formula (1), R₁ represents a C3-C9 polyol group, and R₂ represents a C13-C19 straight chain alkyl group or a C13-C19 straight chain alkenyl group.

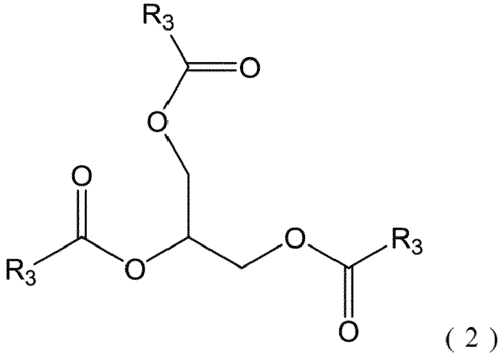

In the formula (2), each R₃ independently represents a group represented by following formula (2-1) or following formula (2-2).

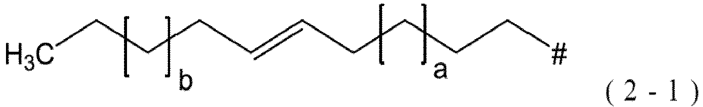

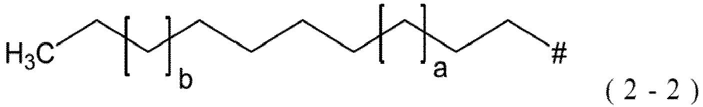

In the formula (2-1) and the formula (2-2), # represents a bonding position of the group represented by R₃ to a carbon atom of the ester group in the formula (2), and a represents an integer from 0 to 5, and b represents an integer from 0 to 5, and a sum of a and b is an integer from 0 to 10.

According to one embodiment of the present disclosure, a molar ratio of the modifying agent including the compound having the formula (1) to the modifying agent including the compound having the formula (2) is 1 to 5.

According to a further embodiment of the present disclosure, a molar ratio (Al/Ti) of aluminum atoms of the organoaluminum compound to the titanium atoms of the titanium halide is 50 to 500.

According to a further embodiment of the present disclosure, a molar ratio (MA/Si) of the modifying agent to the external electron donor is 0.1 to 10.

According to a further embodiment of the present disclosure, a molar ratio (MA/ID) of the modifying agent to the internal electron donor is 1 to 130.

Another aspect of the present disclosure provides the method for producing polypropylene. In the method for producing the polypropylene, a monomer and a catalyst composition are provided, in which the catalyst composition includes a main catalyst, an organoaluminum compound, an external electron donor and a modifying agent, and the main catalyst includes titanium halide, a carrier and an internal electron donor, and a molar ratio (MA/Ti) of the modifying agent to titanium atoms of the titanium halide is greater than 0 and less than 128, and the modifying agent is selected from a group consisting of a compound having following formula (1), a compound having following formula (2) and a combination thereof.

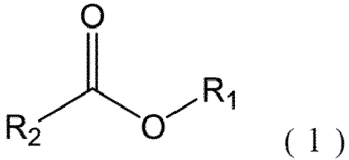

In the formula (1), R₁ represents a C3-C9 polyol group, and R₂ represents a C13-C19 straight chain alkyl group or a C13-C19 straight chain alkenyl group.

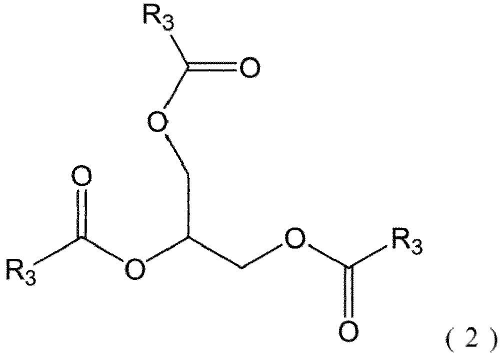

In the formula (2), each R₃ independently represents a group represented by following formula (2-1) or following formula (2-2).

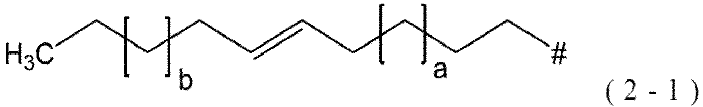

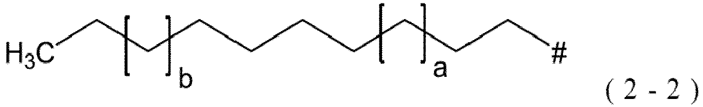

In the formula (2-1) and the formula (2-2), # represents a bonding position of the group represented by R₃ to a carbon atom of the ester group in the formula (2), and a represents an integer from 0 to 5, and b represents an integer from 0 to 5, and a sum of a and b is an integer from 0 to 10. Subsequently, hydrogen is introduced in a heterogeneous reaction system, and a polymerization reaction is performed on the monomer, the catalyst composition and the hydrogen to obtain the polypropylene.

According to a further embodiment of the present disclosure, the monomer is composed of propylene and another α-olefin compound.

According to a further embodiment of the present disclosure, the polymerization reaction includes a prepolymerization reaction and a main polymerization reaction, and the modifying agent is used in the prepolymerization reaction and/or the main polymerization reaction.

According to a further embodiment of the present disclosure, in the polymerization reaction, the modifying agent forms a reverse microcellular structure, when the modifying agent has the compound represented by the formula (1), the group represented by R₁ is inside the reverse microcellular structure, and the group represented by R₂ is outside the reverse microcellular structure, or when the modifying agent has the compound represented by the formula (2), the three ester groups are inside the reverse microcellular structure, and the three groups represented by R₃ are outside the reverse microcellular structure.

According to a further embodiment of the present disclosure, a concentration of the hydrogen is 0.1 mol% to 40 mol% based on an amount of the propylene as 100 mol%.

Another aspect of the present disclosure provides the method for producing polypropylene. In the method for producing the polypropylene, a monomer and a catalyst composition are provided, in which the monomer comprises propylene. The catalyst composition includes a main catalyst, an organoaluminum compound, an external electron donor and a modifying agent, and the main catalyst includes titanium halide, a carrier and an internal electron donor. The modifying agent includes hydrophilic groups and hydrophobic groups, and a molar ratio (MA/Ti) of the modifying agent to titanium atoms of the titanium halide is greater than 0 and less than 128. The method further includes introducing hydrogen in a heterogeneous reaction system, and performing a polymerization reaction on the monomer, the catalyst composition and the hydrogen to obtain the polypropylene. A concentration of the hydrogen is 0.1 mol% to 40 mol% based on an amount of the propylene as 100 mol%.

According to a further embodiment of the present disclosure, the modifying agent is selected from a group consisting of a compound having following formula (1), a compound having following formula (2) and any combination thereof.

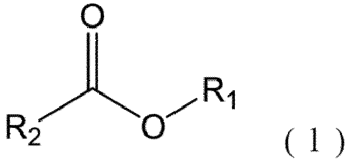

In the formula (1), R₁ represents a C3-C9 polyol group, and R₂ represents a C13-C19 straight chain alkyl group or a C13-C19 straight chain alkenyl group.

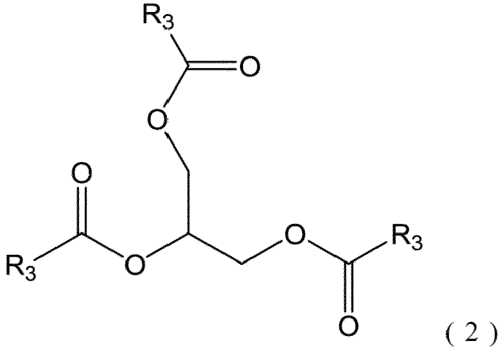

In the formula (2), each R₃ independently represents a group represented by following formula (2-1) or following formula (2-2).

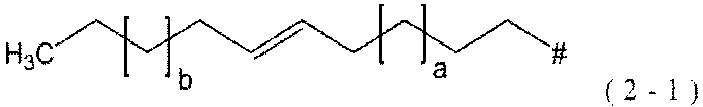

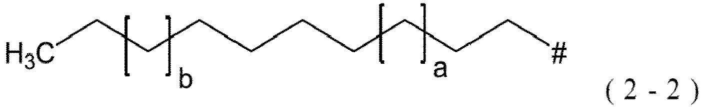

In the formula (2-1) and the formula (2-2), # represents a bonding position of the group represented by R₃ to a carbon atom of the ester group in the formula (2), and a represents an integer from 0 to 5, and b represents an integer from 0 to 5, and a sum of a and b is an integer from 0 to 10.

According to a further embodiment of the present disclosure, a molar ratio of the modifying agent including the compound having the formula (1) to the modifying agent including the compound having the formula (2) is 1 to 5.

According to a further embodiment of the present disclosure, the monomer further comprises ethylene, 1-butene, 1-hexene, 1-octene and/or 4-methyl-1-pentene.

According to a further embodiment of the present disclosure, the internal electron donor comprises phthalate compounds, glycol ester compounds, diether compounds, succinate compounds and any combination thereof.

According to a further embodiment of the present disclosure, a molar ratio of the internal electron donor to titanium atoms of the titanium halide is 0.1 to 1.5.

According to a further embodiment of the present disclosure, a molar ratio of aluminum atoms of the organoaluminum compound to the titanium atoms of the titanium halide is 50 to 500.

According to a further embodiment of the present disclosure, the external electron donor comprises alkoxysilane compounds, alkylaminosilane compounds, alkoxyalkylaminosilane compounds and any combination thereof.

According to a further embodiment of the present disclosure, a molar ratio of the modifying agent to the external electron donor is 0.1 to 10.

According to a further embodiment of the present disclosure, a molar ratio of silicon atoms of the external electron donor to the titanium atoms of the titanium halide is1 to 100.

Applying the catalyst composition for polymerizing the propylene and the method for producing the polypropylene of the present disclosure, the ester compound having the hydrophilic groups and the hydrophobic groups is used as the modifying agent of the catalyst composition for polymerizing the propylene. The modifying agent can form the reverse microcellular structure, so that the polar substances in the raw material are thereinside, thereby reducing the poisoning of the catalyst. In addition, the modifying agent can maintain the valence state of the titanium in the active site of the catalyst at positive trivalent to promote the polymerization reaction between the titanium and the monomer, thereby enhancing the activity of the catalyst.

### BRIEF DESCRIPTION OF THE DRAWINGS

In order to have a more complete understanding of embodiments and their advantages of the present disclosure, please refer to the following description and cooperate with the corresponding drawing. It must be emphasized that various features are not drawn to scale and are for illustration purposes only. The description of the drawing is explained as follows.

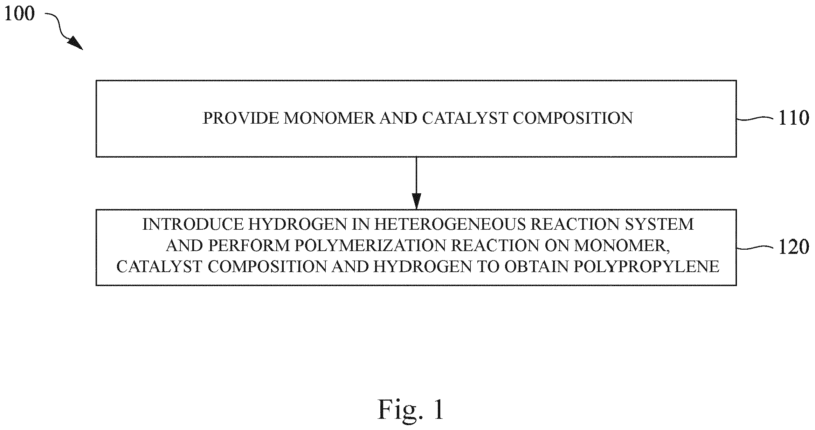

Fig. 1 is a flowchart illustrating a method of producing polypropylene according to an embodiment of the present disclosure.

### DETAILED DESCRIPTION

A "raw material" used in the present disclosure refers to a material used in production of polypropylene. For example, the raw material includes a catalyst composition, a monomer (e.g., propylene and another α-olefin compound), hydrogen and a solvent.

Referring to Fig. 1, in a method 100 for producing propylene, a monomer and a catalyst composition are first provided, as shown in operation 110. In some embodiments, the monomer is only propylene to form a homopolymer of polypropylene. In other embodiments, in addition to propylene, the monomer may optionally include another α-olefin compound to obtain a copolymer of polypropylene. Specific examples of the other α-olefin compound may optionally include ethylene, 1-butene, 1-hexene, 1-octene and/or 4-methyl-1-pentene. Specifically, based on an amount of propylene as 100 mol%, an amount of the other α-olefin compound is greater than 0 mol% and less than 95 mol%. The amount of the other α-olefin compound may be determined according to requirements of a melting point and a melt index of the copolymer of polypropylene. In addition, in some examples, a pressure of the monomer may be 2 kg/cm² to 30 kg/cm².

The catalyst composition includes a main catalyst, an organoaluminum compound, an external electron donor and a modifying agent. The main catalyst includes titanium halide, a carrier and an inner electron donor. In some embodiments, the main catalyst may be a Ziegler-Natta catalyst, which may optionally include another component known to those skilled in the art of the present disclosure. In some embodiments, the carrier may be selected from the group consisting of MgCl₂, Mg(OH)Cl, Mg(OZ₂)₂, SiO₂ and any combination thereof, in which Z represents a C1-C5 alkyl group.

In some embodiments, the titanium halide has a structure represented by following formula (A). In the formula (A), M represents a titanium atom, and X independently represents a halogen atom, and η represents an integer of 2 to 4.

MXₙ (A)

In some embodiments, the internal electron donor is selected from the group consisting of phthalate compounds, glycol ester compounds, diether compounds, succinate compounds and any combination thereof. Specific examples of these compounds may optionally be compounds known to those skilled in the art of the present disclosure.

Further, a molar ratio (ID/Ti) of the internal electron donor to titanium atoms of the titanium halide may be optionally 0.1 to 1.5, and preferably 0.5 to 1. When the molar ratio of the internal electron donor to the titanium atoms of the titanium halide is within the aforementioned range, an activity of the catalyst can be further enhanced.

In some embodiments, the organoaluminum compound has a structure represented by following formula (B). In the formula (B), A represents an aluminum atom, and Y independently represents a C1-C8 alkyl group and alkenyl group. Specific examples of the organoaluminum compound may optionally include triethylaluminum and triisobutylaluminum.

AY₃ (B)

A molar ratio (Al/Ti) of aluminum atoms of the organoaluminum compound to the titanium atoms of the titanium halide may be selectively 50 to 500, preferably is 100 to 400, and more preferably is 150 to 350, to improve the activity of the catalyst and/or reduce residual amounts of metals in polypropylene.

The external electron donor is selected from the group consisting of alkoxysilane compounds, alkylaminosilane compounds, alkoxyalkylaminosilane compounds and any combination thereof. Specific examples of the external electron donor may optionally include methylcyclohexyldimethoxysilane, dicyclopentyldimethoxysilane, diisopropyldimethoxysilane, dicyclopentyldiethylaminosilane, diethylaminotrimethoxysilane and any combination thereof. Furthermore, a molar ratio (Si/Ti) of silicon atoms of the external electron donor to the titanium atoms of the titanium halide may be optionally 1 to 100, preferably is 5 to 30, and more preferably is 10 to 20, to improve the activity of the catalyst.

As above, the modifying agent has a compound represented by following formula (1) or following formula (2).

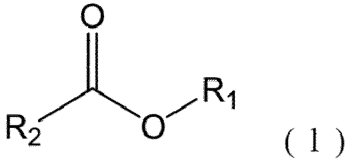

In the formula (1), R₁ represents a C3-C9 polyol group, and R₂ represents a C13-C19 straight chain alkyl group or a C13-C19 straight chain alkenyl group.

If the polyol group represented by R₁ does not have at least two alcohol groups, the modifying agent cannot form a reverse microcellular structure during a polymerization reaction. In some embodiments, the polyol group may optionally be a polyol group formed from glycidol to facilitate the modifying agent to form the stable reverse microcellular structure during the polymerization reaction. Specifically, the polyol group represented by R₁ may optionally have 2 to 4 alcohol groups. It should be noted that if R₁ represents a poly(oxyethylene) group, the modifying agent cannot form the stable reverse microcellular structure during the polymerization reaction. Secondly, if a carbon number of the polyol group represented by R₁ is greater than 9, polarity of the polyol group is reduced, such that it is difficult to form the stable reverse microcellular structure, and a valence state of the titanium in an active site of the catalyst cannot be maintained at positive trivalent.

In addition, if a carbon number of the group represented by R₂ is greater than 19 or less than 13, it is difficult to form the stable reverse microcellular structure. The straight chain alkenyl group represented by R₂ may optionally have 1 to 3 ethylenic bonds to facilitate the modifying agent to form the stable reverse microcellular structure. For example, the compound represented by the above formula (1) may optionally include saturated and unsaturated glyceride.

In the compound represented by the following formula (2), each R₃ independently represents a group represented by following formula (2-1) or following formula (2-2).

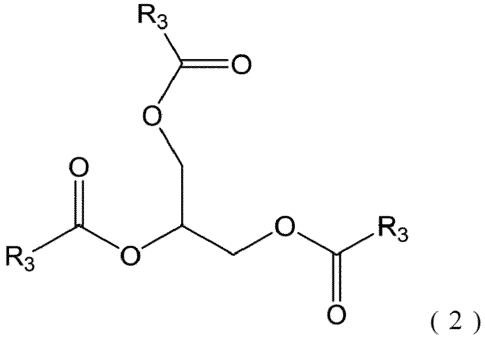

In the formula (2-1) and the formula (2-2), # represents a bonding position of the group represented by R₃ to a carbon atom of the ester group in the formula (2), a represents an integer from 0 to 5, b represents an integer from 0 to 5, and a sum of a and b is an integer from 0 to 10.

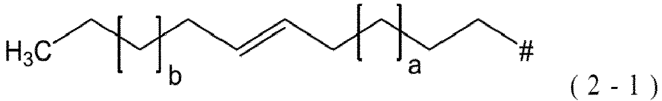

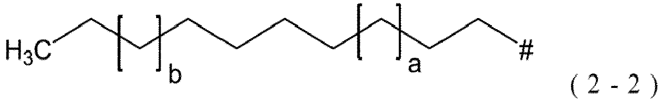

If R₃ does not represent the group represented by the above formula (2-1) or the above formula (2-2), the reverse microcellular structure cannot be formed, and a valence state of the titanium in the active site of the catalyst cannot be maintained at positive trivalent. Preferably, a represents an integer from 1 to 4, and b represents an integer from 1 to 4, and the sum of a and b is an integer from 2 to 8, to facilitate the modifying agent to form a stable reverse microcellular structure during the polymerization reaction.

For example, the modifying agent has compounds represented by following formula (1-1) to formula (1-4) and formula (2-A) to formula (2-B), in which in the formula (1- 3), x and y represent integers, and a sum of x and y is 12 to 16.

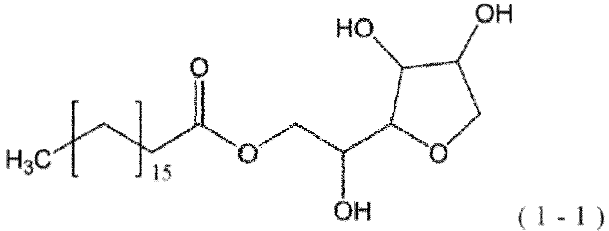

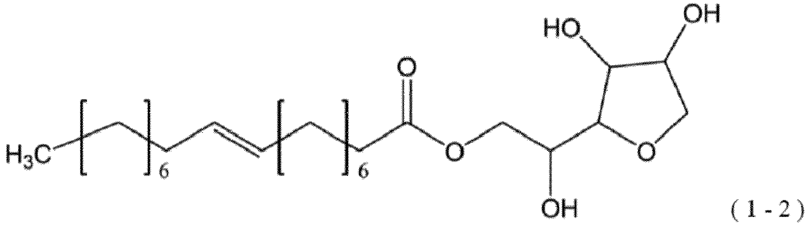

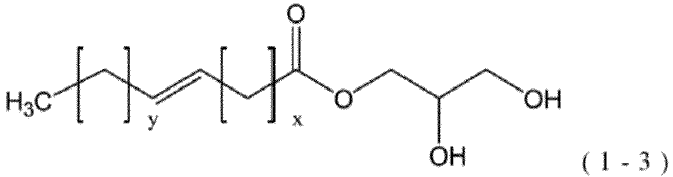

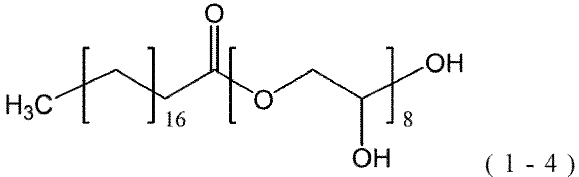

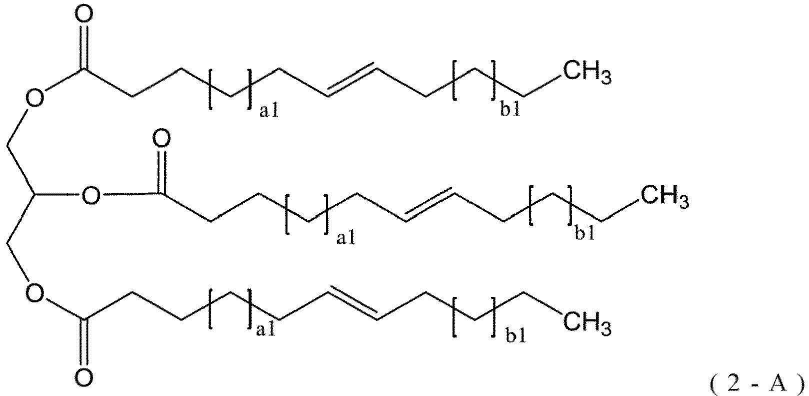

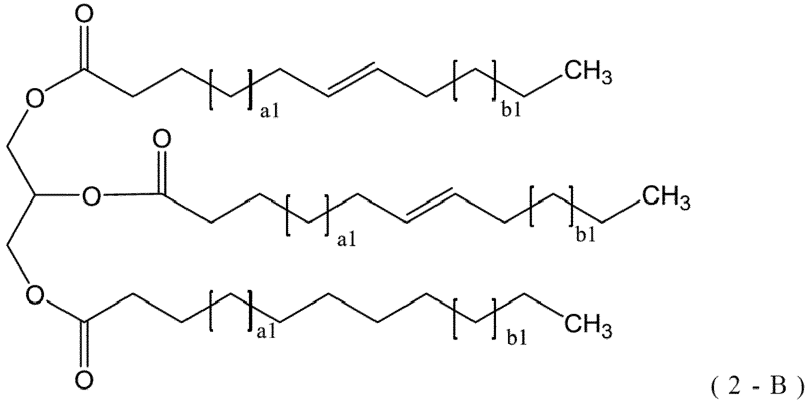

In the above formula (2-A) and above formula (2-B), a1 represents an integer of 1 to 4, and b1 represents an integer of 1 to 4, and a sum of a1 and b1 is 2 to 8.

In some embodiments, the modifying agent may selectively use the modifying agent having the compound represented by the formula (1) and the modifying agent having the compound represented by the formula (2), and a molar ratio of the two modifying agents is 1 to 5 to further enhance the activity of the catalyst through a coordinated action of the two modifying agents.

The modifying agent has hydrophilic groups and hydrophobic groups, so in the solvent (e.g., heptane) of the propylene polymerization reaction, the modifying agent spontaneously forms the reverse microcellular structure (i.e., the hydrophilic groups are inside the reverse microcellular structure, and the hydrophobic groups are outside the reverse microcellular structure), so that polar substances in the raw material are trapped inside the reverse microcellular structure, thus reducing poisoning of the polar substances to the titanium in the active site of the catalyst. In addition, the modifying agent can change the valence state of the titanium in the active site of the catalyst to promote the polymerization reaction between the titanium and the monomer. Accordingly, the activity of the catalyst is improved, and the residual amounts of the metals in the produced polypropylene may be further reduced.

A molar ratio (MA/Ti) of the modifying agent to the titanium atoms of the titanium halide is greater than 0 and less than 128. If the molar ratio of the two is not within the aforementioned range, the modifying agent is not easy to form the reverse microcellular structure, so poisoning of the catalyst cannot be reduced, and the activity of the catalyst cannot be improved. The molar ratio (MA/Ti) of the modifying agent to the titanium atoms of the titanium halide is preferably 1 to 70, and more preferably is 5 to 30.

In addition, in some embodiments, a molar ratio (MA/Si) of the modifying agent and the external electron donor may be selectively 0.1 to 10, and preferably is 0.5 to 5, to further enhance the activity of the catalyst. In some embodiments, a molar ratio (MA/ID) of the modifying agent to the internal electron donor may be 1 to 130, and preferably is 2 to 128, to further enhance the activity of the catalyst.

After operation 110, hydrogen is introduced in the heterogeneous reaction system, and the polymerization reaction is performed on the monomer, the catalyst composition and the hydrogen to obtain the polypropylene, as shown in operation 120. In some embodiments, the heterogeneous reaction system may optionally be a slurry reaction system, a gas phase reaction system or a bulk reaction system. Furthermore, a reaction temperature of the polymerization reaction may optionally be 50°C to 90°C.

In an environment where a hydrogen concentration is 0.1 mol% to 40 mol%, the polymerization reaction may be selectively carried out. The hydrogen concentration is preferably 1 mol% to 30 mol%, in which the hydrogen concentration is based on moles of the propylene. Further, in some embodiments, the polypropylene is used to manufacture substrates, and the hydrogen concentration used may be selectively 1 mol% to 20 mol%, to facilitate production of the polypropylene with a melt index of 1 to 100. In other embodiments, the polypropylene is used to manufacture fibers or fiber cloths, and the hydrogen concentration used is greater than 20 mol% to 40 mol%, to facilitate production of the polypropylene with a melt index greater than 100.

Generally, high hydrogen concentration easily leads to poisoning of the conventional catalyst, thus reducing the activity of the catalyst and increasing the residual amounts of the metals in the produced polypropylene. However, under high hydrogen concentration, the modifying agent of the present disclosure can reduce poisoning of the catalyst to improve the activity of the catalyst and further reduce the residual amounts of the metals in the polypropylene. Therefore, the modifying agent of the present disclosure can increase the melt index of the produced polypropylene by increasing the hydrogen concentration.

In some embodiments, the polymerization includes a prepolymerization and a main polymerization. In some embodiments, the modifying agent may be used in the prepolymerization and/or the main polymerization. Preferably, the modifying agent may only be used in the prepolymerization reaction to significantly improve the activity of the catalyst.

In the polymerization reaction, since the modifying agent has the hydrophilic groups and the hydrophobic groups, it can form the reverse microcellular structure. The hydrophilic groups are inside the reverse microcellular structure, and the hydrophobic groups are outside the reverse microcellular structure, so that the polar substances in the raw material are inside the reverse microcellular structure, thus improving the activity of the catalyst and further reducing the residual amounts of the metals of the produced polypropylene.

In the embodiment where the modifying agent has the compound represented by the above formula (1), the group represented by R₁ is inside the reverse microcellular structure, and the group represented by R₂ is outside the reverse microcellular structure. Secondly, in the embodiment where the modifying agent has the compound represented by the above formula (2), the three ester groups are inside the reverse microcellular structure, and the three groups represented by R₃ are outside the reverse microcellular structure. Furthermore, in the embodiment where the modifying agent has the compounds represented by the above formula (1) and formula (2), the group represented by R₁ and the three ester groups are inside the reverse microcellular structure, and the group represented by R₂ and the three groups represented by R₃ are outside the reverse microcellular structure.

In some application examples, a material of a capacitor film requires insulation, so residual amounts of metals in the material is limited. In addition, based on medical safety and food safety, a medical and food packaging material also needs to use a material with low residual amounts of metals. Since the polypropylene produced by the method for producing the polypropylene of the present disclosure has the low residual amounts of the metals, it can be applied to the capacitor film and the medical and food packaging material.

The following examples are used to illustrate the application of the present disclosure, but those are not intended to limit the present disclosure. Any person skilled in the art can make various changes and modifications without departing from the spirit and scope of the present disclosure.

### Manufacture of Polypropylene

### Example 1-1

With reference to conditions listed in following Table 1, titanium tetrachloride, magnesium chloride and an internal electron donor were used, and a Ziegler-Natta catalyst was prepared in a usual manner of ordinary skill in the art of the present disclosure. Furthermore, triethylaluminum, an external electron donor, a modifying agent, and the aforementioned Ziegler-Natta catalyst were mixed to obtain a catalyst for polymerizing propylene. Next, a slurry reaction system was used to carry out a polymerization reaction to obtain polypropylene of Example 1, in which Al/Ti was 400, and Si/Ti was 15, and ID/Ti was 0.5 to 1, and a pressure of propylene was 6 kg/cm², and a temperature of a prepolymerization reaction was -20°C to 40°C, and a temperature of a main polymerization reaction was 50°C to 90°C.

### Examples 1-2 to 8-3 and Comparative Examples 1-1 to 8-3

Examples 1-2 to 8-3 and Comparative Examples 1-1 to 8-3 were carried out in the same manner as in Example 1-1. The differences were that in Examples 1-2 to 8-3 and Comparative Examples 1-1 to 8-3, an amount of ethylene, the internal electron donor, the external electron donor, the modifying agent, MA/Ti, the hydrogen concentration and an addition stage of the modifying agent might be changed. Specific conditions and evaluation results of Examples 1-1 to 8-3 and Comparative Examples 1-1 to 8-3 are listed in Table 1 and Table 2.

### Examples 9-1 to 9-3 and Comparative Examples 9-1 to 9-3

Examples 9-1 to 9-3 and Comparative Examples 9-1 to 9-3 were carried out in the same manner as in Example 1-1. The differences were that in Examples 9-1 to 9-3 and Comparative Examples 9-1 to 9-3, the modifying agent, MA/Ti, Al/Ti and the hydrogen concentration might be changed. Specific conditions and evaluation results of Examples 9-1 to 9-3 and Comparative Examples 9-1 to 9-3 are listed in Table 3.

### Evaluation Method

### 1. Test of Activity of Catalyst Composition

A usual test method used by a person skilled in the art of the present disclosure was used to perform a test of an activity of a catalyst composition.

### 2. Test of Residual Amounts of Metals in Polypropylene

An inductively coupled plasma atomic emission spectrometer was used to measure residual amounts of metals in the produced polypropylene, in which the residual amounts of the metals included a residual amount of aluminum, a residual amount of magnesium and a residual amount of titanium, and the residual amounts of the metals were respectively based on moles of aluminum atoms of triethylaluminum, magnesium atoms of magnesium chloride and titanium atoms of titanium tetrachloride originally used in the catalyst composition for polymerizing the propylene.

### 3. Tests of Melt index and Melting Point of Polypropylene

Usual test methods used by a person skilled in the art of the present disclosure were used to perform tests of a melt index and a melting point of polypropylene.

**Table 1**

| | | **reaction conditions** | | | | | | | **evaluation results** | | | | | |
|---|---|---|---|---|---|---|---|---|---|---|---|---|---|---|
| | | **amount of ethylene (mol%)** | **catalyst composition** | | | | **hydrogen concentration (mol%)** | **addition stage** | **activity (g-PP/ g-cat.)** | **residual amount of Al** | **residual amount of Mg** | **residual amount of Ti** | **melt index (g/10 min)** | **melting point (°C)** |
| | | | **internal electron donor** | **external electron donor** | **modifying agent** | **MA/Ti** | | | | | | | | |
| | **1-1** | **None** | **phthalate compound** | **methylcyclohexyl dimethoxysilane** | **sorbitan stearate** | **7** | **1.2** | **prepolymerization** | **16353** | **NA** | **NA** | **NA** | **3.9** | **163.9** |
| | **1-2** | | | | | **14** | | | **17503** | **NA** | **NA** | **NA** | **3.6** | **164.1** |
| | **1-3** | | | | | **28** | | | **17526** | **NA** | **NA** | **NA** | **3.5** | **164.7** |
| | **2-1** | **None** | **phthalate compound** | **methylcyclohexyl dimethoxysilane** | **sorbitan oleate** | **7** | **1.2** | **prepolymerization** | **17956** | **NA** | **NA** | **NA** | **4.3** | **164.8** |
| | **2-2** | | | | | **14** | | | **18008** | **NA** | **NA** | **NA** | **3.6** | **164** |
| | **2-3** | | | | | **28** | | | **16769** | **NA** | **NA** | **NA** | **3.4** | **163.5** |
| | **3-1** | **None** | **phthalate compound** | **methylcyclohexyl dimethoxysilane** | **modifying agent A** | **1** | **1.2** | **prepolymerization** | **16849** | **NA** | **NA** | **NA** | **4.3** | **164.3** |
| | **3-2** | | | | | **2** | | | **17713** | **NA** | **NA** | **NA** | **4.3** | **164.5** |
| | **3-3** | | | | | **4** | | | **17907** | **NA** | **NA** | **NA** | **3.9** | **163.6** |
| | **3-4** | | | | | **8** | | | **18070** | **NA** | **NA** | **NA** | **3.4** | **164.5** |
| | **3-5** | | | | | **16** | | | **18264** | **NA** | **NA** | **NA** | **3.7** | **163.7** |
| | **3-6** | | | | | **32** | | | **17830** | **NA** | **NA** | **NA** | **3.4** | **164.8** |
| **Example** | **3-7** | | | | | **64** | | | **16934** | **NA** | **NA** | **NA** | **2.92** | **163.9** |
| | **4** | **None** | **phthalate compound** | **methylcyclohexyl dimethoxysilane** | **sorbitan oleate** | **8** | **1.2** | **prepolymerization** | **19649** | **NA** | **NA** | **NA** | **3.2** | **162.1** |
| | **5** | **None** | **phthalate compound** | **methylcyclohexyl dimethoxysilane** | **modifying agent A** | **8** | **1.2** | **main polymerization** | **16235** | **NA** | **NA** | **NA** | **3.2** | **164.5** |
| | **6** | **None** | **diether compound** | **methylcyclohexyl dimethoxysilane** | **modifying agent B** | **30** | **1.2** | **prepolymerization** | **14620** | **144** | **6.3** | **2.9** | **95** | **162.8** |
| | **7** | **0.91** | **phthalate compound** | **methylcyclohexyl dimethoxysilane** | **modifying agent A** | **8** | **1.2** | **prepolymerization** | **17204** | **195** | **4.6** | **<0.1** | **6.6** | **155.6** |
| | **8-1** | **None** | **phthalate compound** | **methylcyclohexyl dimethoxysilane** | **modifying agent A** | **8** | **3** | **prepolymerization** | **19753** | **131** | **< 0.1** | **< 0.1** | **7.6** | **163.9** |
| | **8-2** | | | | | **8** | **6** | | **20162** | **137** | **< 0.1** | **< 0.1** | **40** | **164** |
| | **8-3** | | | **dicyclopentyldiet hylaminosilane** | | **8** | **24** | | **9382** | **143** | **3.7** | **< 0.1** | **1608** | **160.5** |

**Table 2**

| | | **reaction conditions** | | | | | | | **evaluation results** | | | | | |
|---|---|---|---|---|---|---|---|---|---|---|---|---|---|---|
| | | **amount of ethylene (mol%)** | **catalyst composition** | | | | **hydrogen concentration (mol%)** | **addition stage** | **activ ity (g-PP/ g-cat.)** | **residual amount of Al** | **residual amount of Mg** | **residual amount of Ti** | **melt index (g/10 min)** | **melting point (°C)** |
| | | | **internal electron donor** | **external electron donor** | **modifying agent** | **MA/Ti** | | | | | | | | |
| | **1** | **None** | **phthalate compound** | **methylcyclohexyl dimethoxysilane** | **None** | **None** | **1.2** | **None** | **14940** | **NA** | **NA** | **NA** | **4.5** | **163.9** |
| | **2** | **None** | **phthalate compound** | **methylcyclohexyl dimethoxysilane** | **N,N-bis-(2-hydroxyeth yl)alkylamm onium salt** | **48** | **1.2** | **prepolymerization** | **12584** | **NA** | **NA** | **NA** | **3.3** | **164.8** |
| | **3-1** | **None** | **phthalate compound** | **methylcyclohexyl dimethoxysilane** | **sodium cetyl sulfonate** | **14** | **1.2** | **prepolymerization** | **11292** | **NA** | **NA** | **NA** | **4.4** | **164.4** |
| | **3-2** | | | | | **28** | | | **9370** | **NA** | **NA** | **NA** | **5** | **165** |
| | **3-3** | | | | | **56** | | | **7666** | **NA** | **NA** | **NA** | **4.7** | **165.7** |
| | **4-1** | **None** | **phthalate compound** | **methylcyclohexyl dimethoxysilane** | **tetradecyl dimethyl betaine** | **4.5** | **1.2** | **prepolymerization** | **15194** | **NA** | **NA** | **NA** | **4.2** | **NA** |
| **Comparative Example** | **4-2** | | | | | **9** | | | **13565** | **NA** | **NA** | **NA** | **4.3** | **NA** |
| | **4-3** | | | | | **18** | | | **9628** | **NA** | **NA** | **NA** | **5** | **NA** |
| | **5** | **None** | **phthalate compound** | **methylcyclohexyl dimethoxysilane** | **modifying agent A** | **128** | **1.2** | **prepolymerization** | **11716** | **NA** | **NA** | **NA** | **2.72** | **165.6** |
| | **6** | **None** | **diether compound** | **methylcyclohexyl dimethoxysilane** | **None** | **None** | **1.2** | **None** | **11543** | **172** | **10.7** | **8.1** | **91** | **162.3** |
| | **7** | **0.86** | **phthalate compound** | **methylcyclohexyl dimethoxysilane** | **None** | **None** | **1.2** | **None** | **10162** | **261** | **9.5** | **<0.1** | **5.1** | **157.5** |
| | **8-1** | **None** | **phthalate compound** | **methylcyclohexyl dimethoxysilane** | **None** | **None** | **3** | **None** | **14422** | **182** | **1.4** | **<0.1** | **7** | **164.3** |
| | **8-2** | | | | | | **6** | | **13360** | **177** | **1.9** | **<0.1** | **30** | **164.4** |
| | **8-3** | | | **dicyclopentyldiet hylaminosilane** | | | **24** | | **8487** | **246** | **15.2** | **<0.1** | **1310** | **160.9** |

Please refer to Table 1 and Table 2, according to Examples 1-1 to 1-3, Examples 2-1 to 2-3, Examples 3-1 to 3-7, Comparative Example 1, Comparative Example 2, Comparative Examples 3-1 to 3-3 and Comparative Examples 4-1 to 4-3, compared to N,N-bis-(2-hydroxyethyl)alkylammonium salt, sodium cetyl sulfonate and tetradecyl dimethyl betaine, use of sorbitan stearate, sorbitan oleate and the modifying agent A as the modifying agent could enhance the activity of the catalyst composition.

According to Examples 3-1 to 3-7 and Comparative Example 5, if the amount of the modifying agent A used was too high (e.g., MA/Ti was 128), the activity of the catalyst composition was reduced.

According to Example 3-4, Example 4 and Comparative Example 1, in Example 4, sorbitan oleate and the modifying agent A were used as the modifying agent, when the molar ratio of the two was 3, the activity of the catalyst composition could be further enhanced.

According to Example 5 and Example 3-4, the modifying agent A was used in the prepolymerization stage, and the modifying agent A was used in the main polymerization stage, both could enhance the activity of the catalyst composition, and the modifying agent A used in the prepolymerization stage could further enhance the activity of the catalyst composition.

According to Example 6 and Comparative Example 6, the modifying agent B could enhance the activity of the catalyst composition.

According to Example 7 and Comparative Example 7, the catalyst composition including the modifying agent A could also be applied in production of a copolymer of polypropylene to enhance the activity of the catalyst composition and reduce the residual amounts of the metals in the produced polypropylene.

According to Examples 8-1 to 8-3 and Comparative Examples 8-1 to 8-3, the modifying agent A used as the modifying agent could reduce poisoning of the catalyst caused by high hydrogen concentration to enhance the activity of the catalyst composition and reduce the residual amounts of the metals in the produced polypropylene, so the increase of the hydrogen concentration could be used to increase the melt index of polypropylene.

**Table 3**

| | | **reaction conditions** | | | | | | | **evaluation results** | | | | | |
|---|---|---|---|---|---|---|---|---|---|---|---|---|---|---|
| | | **catalyst com position** | | | | | **hydrogen concentration (mol%)** | **addition stage** | **activity (g-PP/ g-cat.)** | **residual amount of Al** | **residual amount of Mg** | **residual amount of Ti** | **melt index (g/10 min)** | **melting point (°C)** |
| | | **internal electron donor** | **external electron donor** | **modifying agent** | **MA/Ti** | **Al/Ti** | | | | | | | | |
| **Example** | **9-1** | **phthalate compound** | **methylcyclohexyl dimethoxysilane** | **modifying agent A** | **8** | **400** | **2** | **prepolymerization** | **18070** | **147** | **7.2** | **0.4** | **3.4** | **164.5** |
| | **9-2** | | | | **8** | **200** | | | **16730** | **117** | **8.5** | **0.7** | **3** | **163.1** |
| | **9-3** | | | | **8** | **100** | | | **11025** | **83** | **12.2** | **0.9** | **2.7** | **163.8** |
| **Comparative Example** | **9-1** | **phthalate compound** | **methylcyclohexyl dimethoxysilane** | **None** | **None** | **400** | **2** | **prepolymerization** | **14940** | **194** | **8.3** | **0.6** | **4.5** | **163.9** |
| | **9-2** | | | | | **200** | | | **11746** | **158** | **12.4** | **0.9** | **3.6** | **164.1** |
| | **9-3** | | | | | **100** | | | **10431** | **95** | **14.8** | **1.2** | **3.2** | **164.4** |
| **Note: In Table 1 to Table 3,** | | | | | | | | | | | | | | |
| **"MA/Ti" represents the molar ratio of the modifying agent to the titanium atoms of the titanium tetrachloride.** | | | | | | | | | | | | | | |
| **"NA" represents the test was not performed.** | | | | | | | | | | | | | | |
| **"Modifying agent A" and "modifying agent B" respectively represent the compounds having the formula (2-A) and the formula (2-B).** | | | | | | | | | | | | | | |

Please refer to Table 3, according to Examples 9-1 to 9-3 and Comparative Examples 9-1 to 9-3, when Al/Ti was 100 to 400, the activity of the catalyst composition was enhanced, and the residual amounts of the metals in the produced polypropylene were reduced.

In summary, the catalyst composition for polymerizing the propylene and the method for producing the polypropylene of the present disclosure use the ester compound having the hydrophilic groups and the hydrophobic groups as the modifying agent of the catalyst composition for polymerizing the propylene. In the propylene polymerization reaction, the modifying agent forms the reverse microcellular structure, and the hydrophilic groups and the hydrophobic groups are respectively inside and outside the reverse microcellular structure. The polar substances in the raw material are retained inside the reverse microcellular structure to reduce poisoning of the catalyst. In addition, the modifying agent can maintain the valence state of the titanium in the active site of the catalyst at positive trivalent to promote the polymerization reaction between the titanium and the monomer, thereby enhancing the activity of the catalyst composition.

## Claims

1. A catalyst composition for polymerizing propylene, comprising:
a main catalyst, wherein the main catalyst comprises titanium halide, a carrier and an internal electron donor;
an external electron donor;
an organoaluminum compound; and
a modifying agent, wherein a molar ratio of the modifying agent to titanium atoms of the titanium halide is greater than 0 and less than 128, and the modifying agent is selected from a group consisting of a compound having following formula (1), a compound having following formula (2) and any combination thereof; 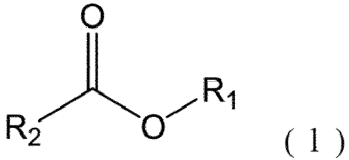 wherein in the formula (1), R₁ represents a C3-C9 polyol group, and R₂ represents a C13-C19 straight chain alkyl group or a C13-C19 straight chain alkenyl group; and 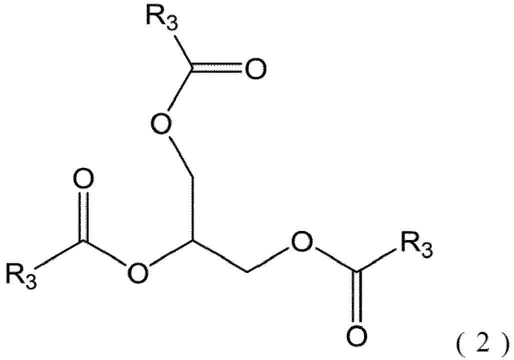 in the formula (2), each R₃ independently represents a group represented by following formula (2-1) or following formula (2-2); 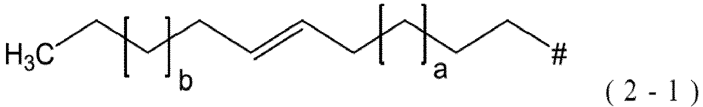 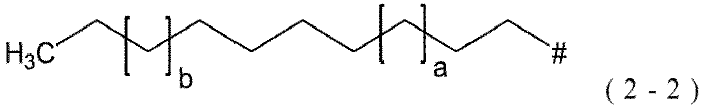 in the formula (2-1) and the formula (2-2), # represents a bonding position of the group represented by R₃ to a carbon atom of the ester group in the formula (2), a represents an integer from 0 to 5, b represents an integer from 0 to 5, and a sum of a and b is an integer from 0 to 10.

2. The catalyst composition for polymerizing the propylene of claim 1, wherein a molar ratio of the modifying agent including the compound having the formula (1) to the modifying agent including the compound having the formula (2) is 1 to 5.

3. The catalyst composition for polymerizing the propylene of claim 1, wherein a molar ratio of aluminum atoms of the organoaluminum compound to the titanium atoms of the titanium halide is 50 to 500.

4. The catalyst composition for polymerizing the propylene of claim 1, wherein a molar ratio of the modifying agent to the external electron donor is 0.1 to 10.

5. The catalyst composition for polymerizing the propylene of claim 1, wherein a molar ratio of the modifying agent to the internal electron donor is 1 to 130.

6. A method for producing polypropylene, comprising:
providing a monomer and a catalyst composition, wherein the catalyst composition comprises a main catalyst, an organoaluminum compound, an external electron donor and a modifying agent, the main catalyst comprises titanium halide, a carrier and an internal electron donor, a molar ratio of the modifying agent to titanium atoms of the titanium halide is greater than 0 and less than 128, and the modifying agent is selected from a group consisting of a compound having following formula (1), a compound having following formula (2) and any combination thereof; 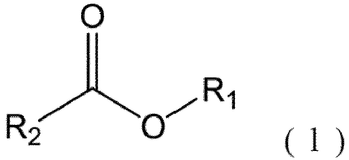 in the formula (1), R₁ represents a C3-C9 polyol group, and R₂ represents a C13-C19 straight chain alkyl group or a C13-C19 straight chain alkenyl group; and 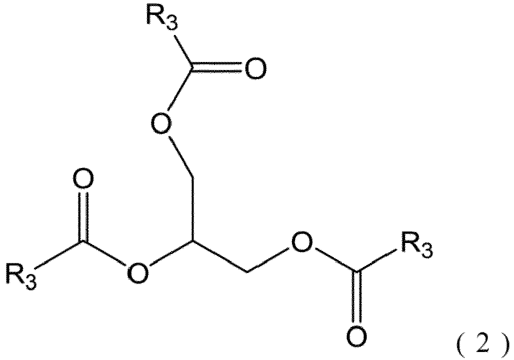 in the formula (2), each R₃ independently represents a group represented by following formula (2-1) or following formula (2-2); 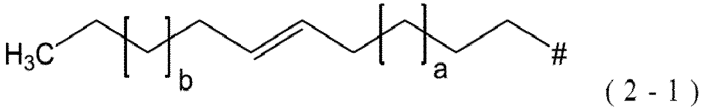 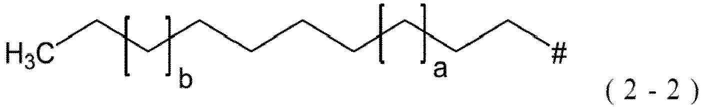 in the formula (2-1) and the formula (2-2), # represents a bonding position of the group represented by R₃ to a carbon atom of the ester group in the formula (2), a represents an integer from 0 to 5, b represents an integer from 0 to 5, and a sum of a and b is an integer from 0 to 10; and
introducing hydrogen in a heterogeneous reaction system and performing a polymerization reaction on the monomer, the catalyst composition and the hydrogen to obtain the polypropylene.

7. The method for producing the polypropylene of claim 6, wherein the monomer is composed of propylene and another α-olefin compound.

8. The method for producing the polypropylene of claim 7, wherein a concentration of the hydrogen is 0.1 mol% to 40 mol% based on an amount of the propylene as 100 mol%.

9. The method for producing the polypropylene of claim 6, wherein the polymerization reaction comprises a prepolymerization reaction and a main polymerization reaction, and the modifying agent is used in the prepolymerization reaction and/or the main polymerization reaction.

10. The method for producing the polypropylene of claim 6, wherein in the polymerization reaction, the modifying agent forms a reverse microcellular structure,
when the modifying agent has the compound represented by the formula (1), the group represented by R₁ is inside the reverse microcellular structure, and the group represented by R₂ is outside the reverse microcellular structure, and/or
when the modifying agent has the compound represented by the formula (2), the three ester groups are inside the reverse microcellular structure, and the three groups represented by R₃ are outside the reverse microcellular structure.

11. The method for producing the polypropylene of claim 6, wherein a molar ratio of the modifying agent of the compound having the formula (1) to the modifying agent of the compound having the formula (2) is 1 to 5.

12. The method for producing the polypropylene of claim 6, wherein a molar ratio of the internal electron donor to titanium atoms of the titanium halide is 0.1 to 1.5.

13. The method for producing the polypropylene of claim 6, wherein a molar ratio of aluminum atoms of the organoaluminum compound to the titanium atoms of the titanium halide is 50 to 500.

14. The method for producing the polypropylene of claim 6, wherein a molar ratio of the modifying agent to the external electron donor is 0.1 to 10.

15. The method for producing the polypropylene of claim 6, wherein a molar ratio of silicon atoms of the external electron donor to the titanium atoms of the titanium halide is1 to 100.
